# EUROPEAN PATENT APPLICATION

(11) **EP 2 330 019 A1**
(43) Date of publication of application: **08.06.2011**
(21) Application number: 09177996.7
(22) Date of filing: 04.12.2009
(51) Int. Cl.: B62D 29/00, G10K 11/168

(54) **Baffle reverse molding**

(71) Applicant: Sika Technology AG, 6340 Baar (CH)
(72) Inventor: Belpaire, Vincent, 1180, Brussel (BE); Lindgren, Henrik, 1400, Nivelles (BE)
(74) Representative: Isler, Jörg

(57) **Abstract**

A baffle or reinforcement (170) includes a carrier (175) having an overall thickness (B) and an expandable material (180) bonded to the carrier (175) by a superficial melt. At least a portion of the expandable material (180) has substantially the same thickness (A) in cross-section as at least a portion of the carrier (175) (e.g., overall thickness (B)). The superficial melt may include injecting the carrier (175) material into a cavity (135) of a mold (105) at a temperature that causes the expandable material (180) to react on a surface and chemically bond to the carrier (175) material.

## Description

### BACKGROUND

A baffle or reinforcement includes a carrier and one or more thermally expandable materials designed for positioning in cavities of, for instance, automotive or aerospace beams, pillars, rails, doors, etc. to provide acoustic dampening and/or sealing and/or structural reinforcement. The carrier is generally formed from plastic or metal surrounded with the expandable material. When inserted into the cavity and by the action of the heat applied in the electrophoresis baking oven, the foam material expands to seal the cavity and/or bond the carrier to the member.

Such baffles or reinforcements may be formed using various techniques. These techniques include extruding the foamable material with the carrier, overmolding the foamable material onto the carrier, or assembling separately produced foamable material and carrier using mechanical fasteners or an adhesive. While each of these techniques may produce a suitable baffle or reinforcement, these techniques suffer from various drawbacks, including high tooling cost. Therefore, a new design and tooling concept and related process is needed that reduces tooling cost, yet produces baffles or reinforcements that meet acoustic and/or sealing performance and/or structural support requirements.

### SUMMARY

A reinforcement includes a carrier having an overall thickness and an expandable material bonded to the carrier by a superficial melt. At least a portion of the expandable material has substantially the same thickness in cross-section as the overall thickness of the carrier.

### BRIEF DESCRIPTION OF THE DRAWINGS

Figure 1A illustrates an exemplary tool with a selectively rotatable plate in a first position;

Figure 1B illustrates an exemplary cross-section of the exemplary tool of Figure 1A;

Figure 2 illustrates the exemplary tool of Figure 1A with the selectively rotatable plate moving from the first position to a second position;

Figure 3 illustrates the exemplary tool of Figure 1A with the selectively rotatable plate in the second position;

Figure 4 illustrates an exemplary cross-section of a reinforcement made with the tool of Figures 1A-3;

Figure 5 illustrates another exemplary cross-section of a reinforcement made with the tool of Figures 1A-3;

Figure 6 illustrates yet another exemplary cross-section of a reinforcement made with the tool of Figures 1A-3;

Figure 7 illustrates yet another exemplary cross-section of a reinforcement made with the tool of Figures 1A-3;

Figures 8A-B illustrate an exemplary cross-section of a reinforcement having a carrier lip and an expandable material disposed in a ring about the carrier;

Figures 9A-B illustrate an exemplary cross-section of a reinforcement having the expandable material disposed in a ring about the carrier;

Figures 10A-F illustrate an exemplary cross-section of a reinforcement having two carrier lips and an expandable material disposed in a ring about the carrier;

Figures 11A-C illustrate an exemplary cross-section of a reinforcement having a carrier fill thin areas of the expandable material; and

Figure 12 illustrates an exemplary method of forming the reinforcement using the tool of Figures 1A-3.

### DETAILED DESCRIPTION

A baffle or reinforcement may be formed from a tool that includes a mold having a first portion for receiving an expandable material and a second portion for receiving the expandable material and a carrier material. The mold has a first side at least partially spaced from a second side. A plate is disposed between the first side and the second side of the mold. The plate is selectively moveable to move the expandable material from the first portion to the second portion. For example, the plate may be rotated or translated to move the expandable material from the first portion to the second portion. Moreover, the first portion and second portions may be disposed on separate molds of two or more different machines.

A method of forming the baffle includes molding an expandable material in a first cavity of a mold, the mold having a first side and a second side partially defining the first cavity, and a plate disposed therebetween, rotating the plate to move the expandable material to a second cavity defined by the mold, and overmolding a carrier material onto the expandable material in a second cavity of the mold partially defined by the first side and the second side.

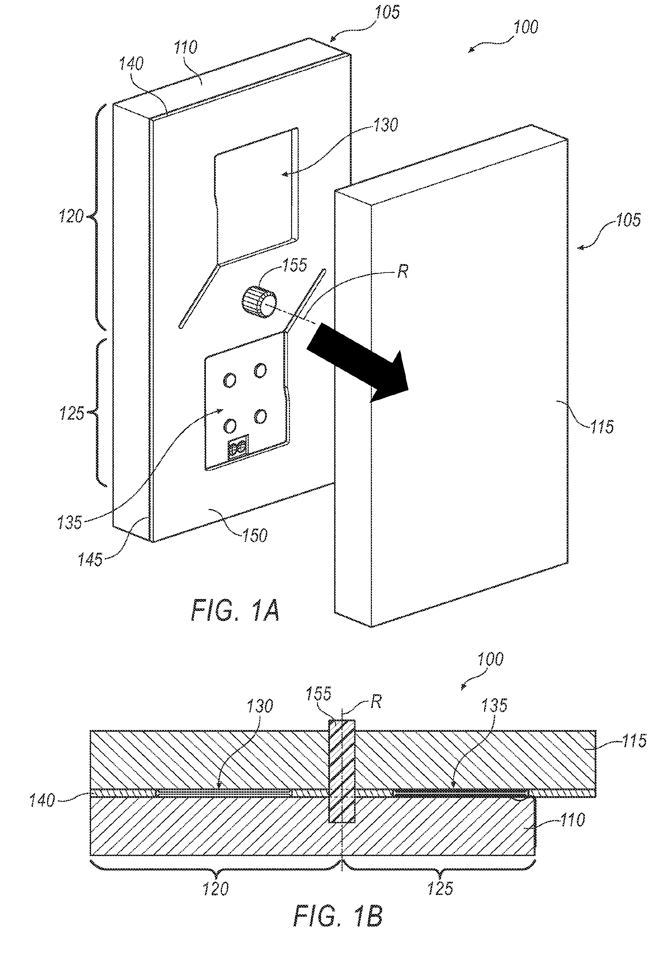

Figures 1A-3 illustrates an exemplary tool 100 having a mold and a plate that may be used to make a baffle having a carrier and an expandable material. The tool 100 may take many different forms and include multiple and/or alternate components and facilities. While an exemplary tool 100 is shown in the Figures, the exemplary components illustrated in the Figures are not intended to be limiting. Indeed, additional or alternative components and/or implementations may be used.

As illustrated in Figure 1A, the tool 100 includes a mold 105 having a first side 110 and a second side 115. The first side 110 and second side 115 may be combined, and either an expandable material or a carrier material may be introduced into the mold 105 in a fluid form through, for instance, injection molding. Once cooled, the expandable material and carrier material form the baffle or reinforcement as shaped by the mold 105.

The first side 110 and second side 115 of the mold 105 may each include a first portion 120 and a second portion 125. The first portion 120 may define a first cavity 130 that receives the heated expandable material. The first cavity 130 defines a shape of the expandable material after being injected into the mold 105. The second portion 125 may define a second cavity 135 that receives the cooled expandable material and the heated carrier material. The second cavity 135 defines the shape of an assembled baffle or reinforcement (e.g., having the cooled expandable material and carrier material).

A plate 140 may be disposed between the first side 110 and the second side 115 of the mold 105, and partially define the first cavity 130 and the second cavity 135. When injecting the expandable material and/or carrier material into the mold 105, the first side 110 and second side 115 of the mold 105 may be pressed upon opposite surfaces of the plate 140. Specifically, the first side 110 may press upon a back surface 145, while the second side 115 may press upon a front surface 150. When separated, however, the plate 140 may stay disposed on either the first side 110 or the second side 115. As illustrated in Figure 1A, the plate 140 is disposed on the first side 110 when the second side 115 is separated from the first side 110.

The plate 140 is selectively moveable to, for example, move the expandable material from a first position to a second position. In the first position, the expandable material is disposed in the first cavity 130 in the first portion 120 of the mold 105. In the second position, however, the expandable material is disposed in the second cavity 135 in the second portion 125 of the mold 105. Specifically, the expandable material may be injected into the first cavity 130 while the mold 105 is closed. When the expandable material has at least partially cooled, the first side 110 and second side 115 of the mold 105 may be separated. The plate 140 may then rotate about a rotation axis **R** until the cooled expandable material is disposed within the second cavity 135.

The plate 140 may include a knob 155 integrally formed with and extending from the plate 140 for selectively rotating the plate 140 from the first position to the second position. The knob 155 may be located on the plate 140 between the first portion 120 and the second portion 125 and define the rotation axis **R** about which the plate 140 rotates. Alternatively, the knob 155 may be located elsewhere on the plate 140. For example, the knob 155 may be located in a corner of the plate 140 while the rotation axis **R** is near the center of the plate 140.

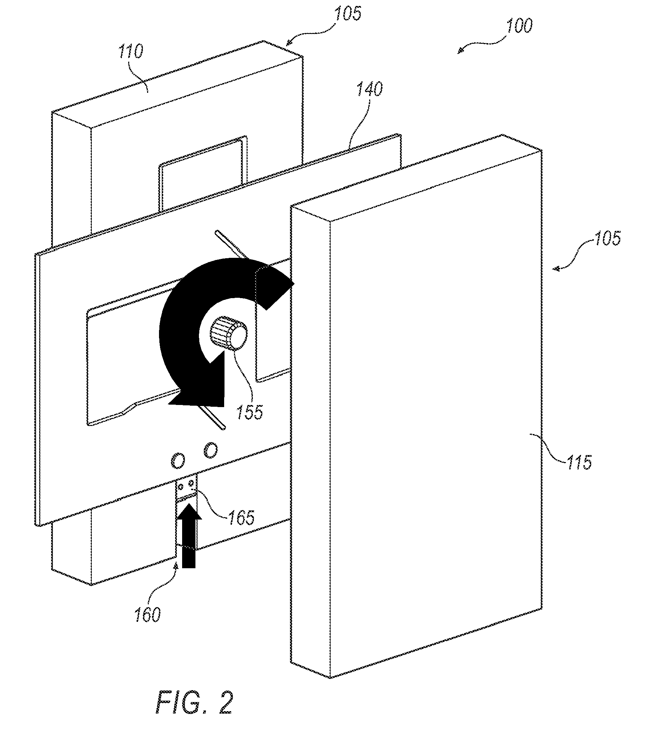

A tool operator may manually rotate the plate 140 by turning the knob 155. Alternatively, the plate 140 may be rotated by a motor (not shown). The motor may be disposed on the first side 110 or second side 115 of the mold 105. Moreover, the motor may allow the plate 140 to rotate while the first side 110 and second side 115 of the mold 105 are closed. Figure 2 illustrates the plate 140 in an intermediate position between the first position and the second position.

In one exemplary approach, the plate 140 may be configured for translation movement to move the expandable material from the first cavity 130 to the second cavity 135. For example, the plate 140 may be configured to slide the expandable material toward the second cavity 135.

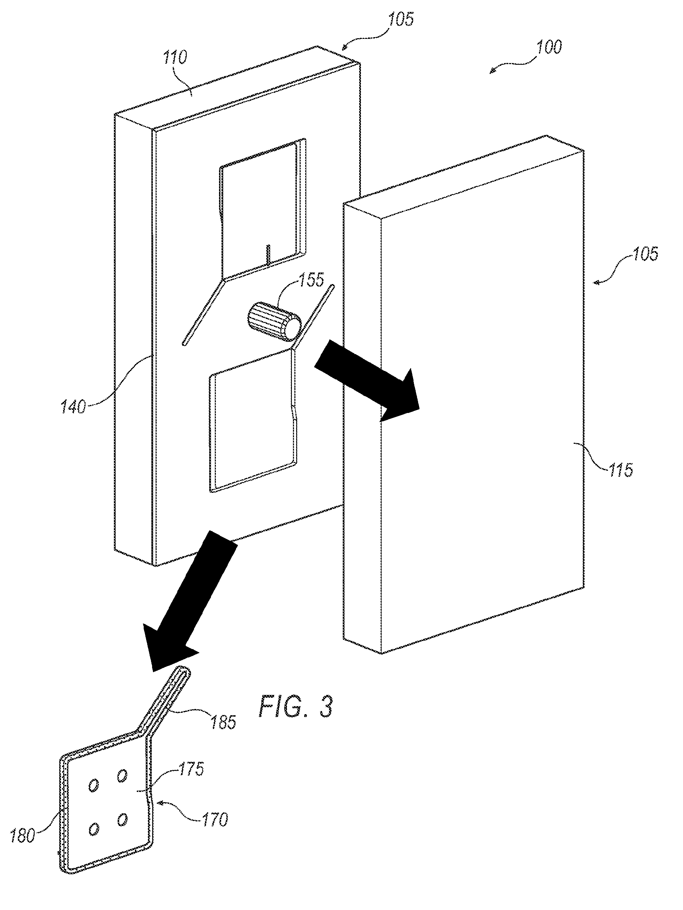

While moving from the first position to the second position, the mold 105 may be opened or closed. For purposes of clarity, however, the first side 110 and second side 115 are separated in Figure 2. Also, Figure 2 shows the plate 140 rotating in a counter-clockwise direction to move from the first position to the second position. The plate 140 may also or alternatively be rotated in a clockwise direction or translated. Figure 3 illustrates the plate 140 in the second position. If the first side 110 and second side 115 are separated while the plate 140 is rotated, the mold 105 may be closed after the plate 140 is rotated to the second position.

Returning to Figure 2, the first side 110 of the mold 105 may define a slot 160 for receiving a fixation element 165. The slot 160 may extend from an edge of the first side 110 at least partially through the second portion 125. This way, a tool operator, for example, may push the fixation element 165 into the second cavity 135. The fixation element 165 may include a clip or bracket, and may be used to fix the reinforcement in its eventual destination, such as a pillar of a vehicle. The fixation element 165 may be inserted into the slot 160 prior to overmolding the expandable material with the carrier material. Alternatively, the fixation element 165 may be inserted into a slot cut in the first portion of the tool, prior to injection of the expandable material. Then both the expandable material and the fixation element 165 are moved together to the second portion 125. In another alternative approach, the fixation element 165 may be integrally formed with the carrier material. In this exemplary approach, the shape of the fixation element 165 may be defined by the second cavity 135, thus eliminating the need for the slot 160.

The expandable material may be formed from various materials. For example, the expandable material may include an acoustic foam that attenuates sound waves by increasing air resistance. The acoustic foam may expand when heated to a minimum temperature. Therefore, when the carrier material is injected into the second cavity 135, the temperature of the carrier material when injected may be higher than that minimum temperature, which may cause the expandable material to react on the surface and generate a chemical bonding of the carrier material with the expandable material. As the carrier material and expandable material cool, the expandable material may keep its expandable behavior so that it may be expanded after the baffle or reinforcement is placed in a cavity. Alternatively, or in addition, the expandable material may include a structural foam.

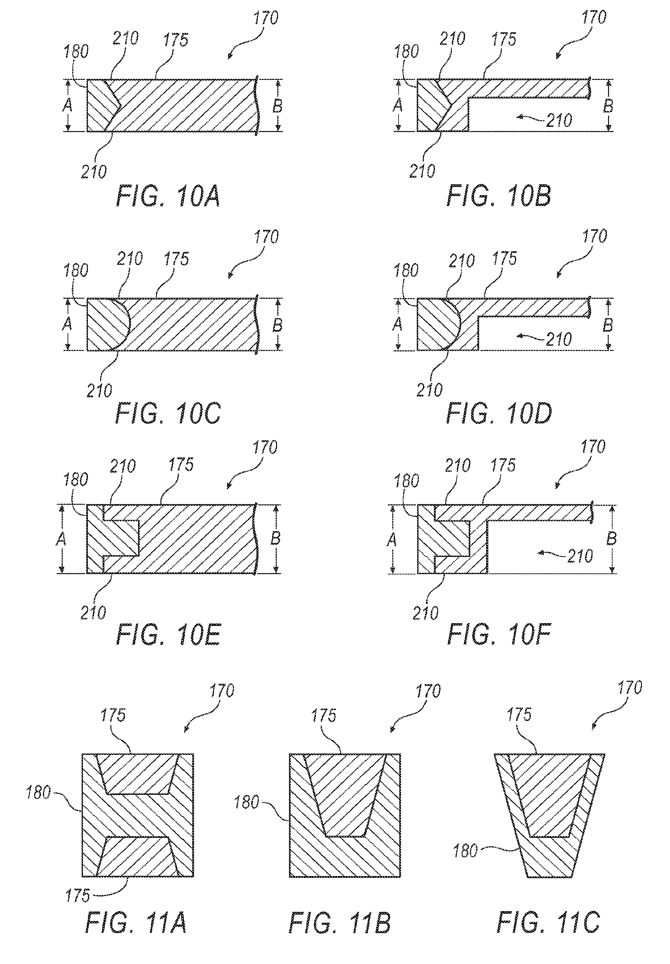

Figure 3 illustrates an exemplary baffle or reinforcement 170 that may be created using the tool 100. As previously discussed, the baffle 170 includes a carrier 175 overmolded onto an expandable material 180. Also, the first cavity 130 and second cavity 135 may define a thin extension 185 (further discussed with respect to Figures 11A to 11C) to fill narrow extensions of the cavity to be sealed or reinforced. The thin extension 185 may be at least partially integrally formed with the carrier 175. Like other parts of the baffle 170, the expandable material 180 may define a periphery of the thin extension 185 when injected into the first cavity 130, and the carrier material may be overmolded onto the expandable material 180 in the second cavity 135 to further define the thin extension 185.

Figure 1B illustrates an exemplary cross-sectional view of the tool 100 of Figures 1A, 2, and 3. As illustrated, the tool 100 in Figure 1B has a simplified construction and cutting time is reduced. For instance, in the second section 125 of the tool 100, the second cavity 135 used to form the carrier 175 from the carrier material and overmolded onto the expandable material 180. As illustrated, the first cavity 130 and the second cavity 135 are defined by flat surfaces of the first side 110 and the second side 115 of the mold 105. Therefore, the resulting baffle 170 may have the expandable material 180 flush with the edges of the carrier 175.

Further, the superficial melt reaction of the expandable material 180 in contact with the hot carrier material 175 in the overmolding process may generate an additional chemical bonding that may be used to secure the carrier 175 to the expandable material. For example, in the overmolding process, the expandable material 180 may be injected at a temperature (e.g., 80°C to 110°C), which is below the temperature that starts the expansion of the expandable material 180 (e.g., 120°C-145°C). The expandable material 180 may cool, and the carrier material may be injected over the expandable material 180 at a temperature between, for example, 180°C and 260°C. The carrier material may then cool to a temperature below the temperature at which the expandable material 180 expands (e.g., 120°C-145°C). With this process, the carrier material adheres to the expandable material 180. The contact surface of the expandable material is exposed to an elevated temperature, above the melting and foaming temperature, causing a superficial foaming and chemical bonding between the expandable material 180 and the carrier material. This adhesion allows the expandable material 180 to adhere to the carrier 175 without mechanical fittings.

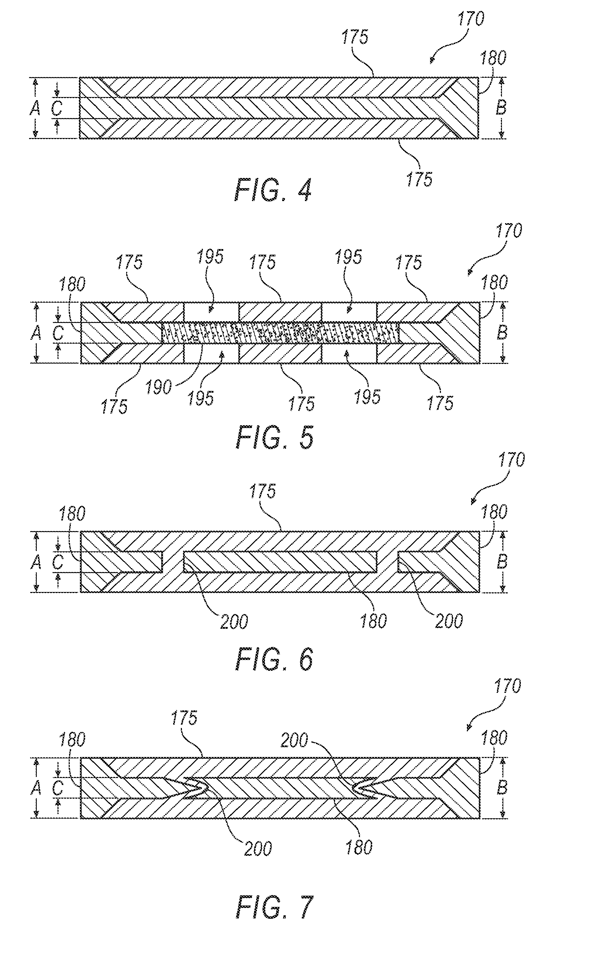

Figure 4 illustrates a cross-sectional view of a baffle or reinforcement 170 made by the tool 100 of Figures 1A-3. Specifically, the carrier material is overmolded onto the expandable material 180 to form the baffle 170. As shown, the baffle 170 includes the carrier 175 and the expandable material 180 in a sandwich configuration. Along the periphery of the expandable material 180, the thickness of the expandable material 180 has a thickness **A.** The carrier 175 has an overall thickness **B** that is substantially equal to the thickness **A** of the expandable material 180 about the periphery. Because of the sandwich configuration, the carrier 175 is at least partially disposed on either side of the expandable material 180, reducing the thickness of the expandable material 180 to the distance between two carrier portions (e.g., thickness **C).** At least part of the expandable material 180 (e.g., the periphery of the expandable material 180) may have substantially the same thickness as the overall thickness of the carrier 175 (e.g., thickness **B),** while other portions of the expandable material 180 (e.g., between the carrier portions) have a smaller thickness (e.g., thickness **C).** For instance, in the exemplary approach of Figure 4, the expandable material 180 has a thickness (in the periphery) equal to the overall thickness **B** of the carrier 175. For the portions of the expandable material 180 that are "sandwiched" by the carrier 175, the thickness **C** is less than the overall thickness **B** of the carrier 175.

When the exemplary baffle 170 of Figure 4 is heated to a minimum temperature, the expandable material 180 expands and may separate the two sides of the carrier 175 that "sandwich" the expandable material 180. This way, the acoustic performance of the baffle 170 may be improved.

Figure 5 illustrates an exemplary cross-sectional view of another baffle 170 formed by the tool 100 of Figures 1A-3. In this exemplary approach, the baffle 170 includes the carrier 175 and the expandable material 180 in the "sandwich" configuration previously discussed with regard to Figure 4. However, in Figure 5, the carrier 175 may at least partially "sandwich" two different expandable materials 180 and 190 or, alternatively, one expandable material 180 and a non-expandable material 190. If two expandable materials 180 and 190 are used, the other expandable material 190 may include the same or different types of acoustic and/or structural foam as the original expandable material 180.

The carrier 175 may further define holes 195 over portions "sandwiching" of the carrier 175 that "sandwich" the expandable material 180 and/or another expandable or non-expandable material 190. The holes 195 may have various diameters, depending on the application. For example, the diameter of the holes 195 may be 2-20mm, and preferably, 5-12mm. The holes 195 may be used to assist in the process of overmolding the carrier 175 onto the expandable material 180. For example, the holes 195 may be used to support the expandable material 180 and 190 in the tool 100 while the carrier 175 is being formed. Also, the holes 195 may allow one or more of the expandable materials 180 and 190 to escape the carrier 175 and create a noise absorption surface for improved acoustic performance.

Figures 6 and 7 illustrate cross-sectional views of additional exemplary baffles that may be formed by the tool 100. In Figures 6 and 7, the baffle 170 includes the carrier 175 sandwiching the expandable material 180. The carriers 175 in these exemplary approaches, however, further include connectors 200. In Figure 6, the connectors 200 are rigid to prevent the two sides of the carrier 175 from expanding as the expandable material 180 expands. In Figure 7, on the other hand, the connectors 200 are flexible. The flexible connectors 200 of Figure 7 will allow the two sides of the carrier 175 to separate a predetermined distance. The flexible connectors 200, therefore, allow the two sides of the carrier 175 to expand more than if the rigid connectors 200 of Figure 6 were used, but not as much as if no connectors 200 were present, such as illustrated in Figures 4 and 5.

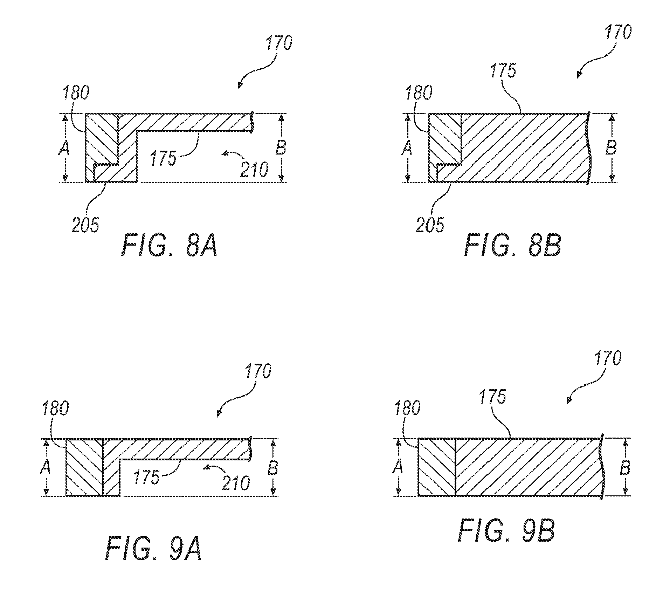

Figures 8A-10F illustrate exemplary cross-sectional views of portions of the baffle 170 that may be made with the tool 100 of Figures 1A-3.

Figures 8A-B illustrate a cross-sectional view of part of an exemplary baffle 170 where the carrier material is overmolded onto the expandable material 180 such that the expandable material 180 forms a seal about a periphery of the carrier 175. As illustrated in the exemplary baffles 170 of Figures 8A-B, the thickness **A** of the expandable material 180 is substantially equal to the overall thickness **B** of the carrier 175.

The baffle 170 of Figures 8A-B shows the carrier 175 having a lip 205 to support the expandable material 180. Further, the superficial melt reaction of the expandable material 180 in contact with hot carrier material 175 in the overmolding process will generate an additional chemical bonding that may be used to secure the carrier 175 to the expandable material 180. The exemplary baffle 170 of Figure 8A shows the carrier 175 having a recess 210, while the exemplary approach of Figure 8B shows the carrier 175 without the recess 210.

Figures 9A-9B also illustrate a cross-sectional view of part of an exemplary baffle 170 where the carrier material is overmolded onto the expandable material 180 such that the expandable material 180 forms a seal about the periphery of the carrier 175. However, the carriers 175 illustrated in the reinforcements of Figures 9A-B do not have a lip. Therefore, the expandable material 180 may be adhered to the carrier 175 with the above-mentioned superficial melt reaction. As illustrated in the exemplary baffles 170 of Figures 9A-B, the thickness **A** of the expandable material 180 is substantially equal to the overall thickness **B** of the carrier 175.

Figures 10A-10F further illustrate a cross-sectional view of part of exemplary baffles where the carrier material is overmolded onto the expandable material 180, such that the carrier material forms a seal about a periphery of the carrier 175. In this exemplary approach, the carrier 175 includes two lips 205 for supporting the expandable material 180. The expandable material 180 may further adhere to the carrier 175 with the above-mentioned superficial melt reaction. Figures 10A, C, and E illustrate the carrier 175 without the recess 210 in cross-section, while Figures 10B, D, and F illustrate the carrier 175 having the recess 210 in cross-section. As illustrated in the exemplary baffles 170 of Figures l0A-F, the thickness **A** of the expandable material 180 is substantially equal to the overall thickness **B** of the carrier 175.

Further, for the exemplary baffles 170 illustrated in Figures 5-10F, the design construction of the baffles 170 having the thickness **A** about the periphery of the expandable material 180 substantially equal to the overall thickness **B** of the carrier 175 makes it possible to produce the baffle 170 as illustrated with a simplified tool (e.g., the tool 100 illustrated in Figures 1A-3), especially in the second section 125 of the tool 100 where both sides of the second cavity 135 are substantially flat or with a dome-shape forming the recess 210 illustrated in Figures 8A, 9A, 10B, 10D, and 10F.

Figures 11A-C illustrate exemplary cross-sections of thin extension 185 of baffle needed to seal thin cavity extensions. The thin extension 185 may be formed by the tool 100 at the same time as the complete baffle 170, forming first the expandable material 180 in the first section of the tool 120 and overmolding the carrier material 175 in the second section 125.

Referring to Figure 11A, the first cavity 130 forms the expandable material 180 to define an H-shape that is filled with the carrier material in the second cavity 135. The carrier 175, therefore, at least partially sandwiches the expandable material 180 when overmolded onto the expandable material 180. Figure 11B illustrates the expandable material 180 being formed to define a U-shape. In the second cavity 135, the carrier material is provided such that the carrier 175 fills the void left by the expandable material 180. Figure 11C illustrates the expandable material 180 being formed with a V-shape, and the corresponding carrier material being introduced into the cavity left by the expandable material 180.

Although shown separately, various combinations of the features illustrated in Figures 4-11C may be combined in a single baffle 170.

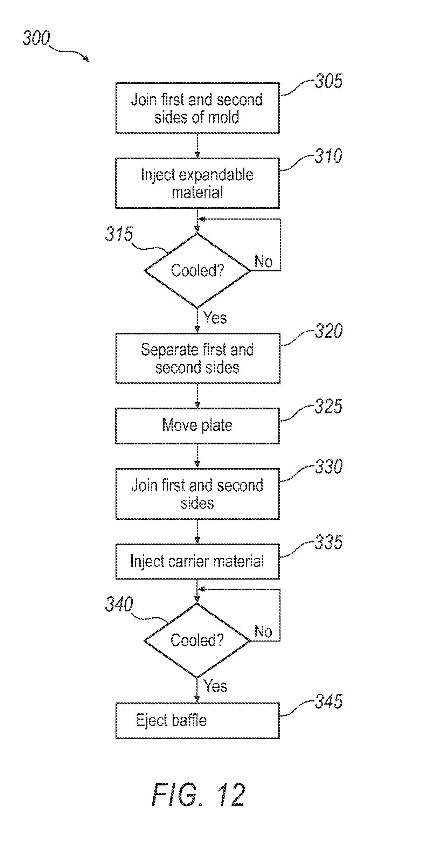

Figure 12 illustrates an exemplary process 300 for producing a baffle or reinforcement using the tool 100 of Figures 1A-3.

Block 305 may include joining the first side 110 of the mold 105 to the second side 115 of the mold 105. As previously discussed, the plate 140 may be disposed between the first side 110 and the second side 115. The plate 140 may further be disposed on either the first side 110 or second side 115 of the mold 105 when the first side 110 is separated from the second side 115.

Block 310 may include injecting the expandable material 180 into the first cavity 130 of the mold 105. The first cavity 130 is located in the first portion 120 of the mold 105. The expandable material 180 may be heated and injected into the first cavity 130 in a fluid state. The first cavity 130 may define various cross-sections for the expandable material 180, as previously discussed. Additionally, as previously discussed, block 310 may further include injecting another expandable material 190.

Decision point 315 may include determining whether the expandable material 180 has cooled to a solid state. This determination may be based upon a predetermined amount of time, or using a temperature sensor within the mold 105. If the expandable material 180 is still in a fluid state, the process 300 continues to wait. If the expandable material 180 has cooled, the process 300 continues with block 320.

Block 320 may include separating the first and second sides 110 and 115 of the mold 105 after the expandable material 180 has had time to cool. Again, the plate 140 may stay disposed on either the first side 110 or the second side 115 when the first side 110 and second side 115 are separated.

Block 325 may include moving the plate 140 to move the expandable material 180 from the first cavity 130 to the second cavity 135. As previously discussed, the plate 140 may be rotated or translated automatically using a motor or manually by an operator. If moved automatically by the motor, the first side 110 and second side 115 of the mold 105 need not necessarily be separated. As previously discussed, the fixation element 165 may be inserted at the same time, just before, or just after the expandable material 180 is moved from the first cavity 130 to the second cavity 135.

Block 330 may include joining the first and second sides 110 and 115 of the mold 105 with the plate 140 disposed therebetween. When joined, the first side 110 and second side 115 of the mold 105 need not actually touch. For instance, the plate 140 or another element may prevent the first side 110 and second side 115 of the mold 105 from actually touching.

Block 335 may include injecting the carrier material into the mold 105. The carrier material may be heated to a fluid state and injected into the mold 105 while in the fluid state. The carrier material may at least partially fill the second cavity 135 and be at least partially injected about the expandable material 180. As previously discussed, the heat of the carrier material 175 will generate a superficial melt of the expandable material 180 that will assist in the connection of the various materials. The cooling of the tool will be optimized to quickly evacuate the amount of heat, such that no reaction will occur in the core of the expandable material 180.

Decision point 340 may include determining whether the carrier material and expandable material 180 have cooled. As with decision point 315, this determination may be based upon a predetermined amount of time or using a temperature sensor within the mold 105. If the carrier material is still in a fluid state, the process 300 continues to wait. If the carrier material has cooled, the process 300 continues with block 345.

Block 345 may include ejecting the baffle 170 after the carrier material and expandable material 180 have cooled. Ejecting the baffle 170 may include separating the first side 110 and the second side 115 of the mold 105, and removing the baffle 170 from the second cavity 135.

In one exemplary implementation, the tool 100 may simultaneously inject expandable or carrier material for two different baffles 170. For instance, the tool 100 may inject the expandable material 180 into the first cavity 130 to begin forming one baffle 170 while overmolding the carrier material onto the expandable material 180 into the second cavity 135 to finish forming another baffle 170. Then, the baffle 170 in the second cavity 135 is ejected from the tool 100 and the expandable material 180 in the first cavity 130 may be moved to the second cavity 135. While the expandable material 180 is in the second cavity 135, the carrier material is injected to finish that baffle 170 and the expandable material 180 for a new baffle 170 may be injected into the first cavity 130. This cycle may continue so that the tool 100 is constantly producing parts of two different baffles 170.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive. Many embodiments and applications other than the examples provided would be apparent upon reading the above description. The scope of the invention should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the invention is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

## Claims

1. A baffle (170) comprising:
a carrier (175) having an overall thickness (B); and
an expandable material (180) bonded to said carrier (175) by a superficial melt,
wherein at least a portion of said expandable material (180) has substantially the same thickness (A) in cross-section as the overall thickness (B) of said carrier (175).

2. A baffle (170) as set forth in claim 1, wherein said carrier (175) has a sandwich configuration and said expandable material (180) is sandwiched between two sides of said carrier (175).

3. A baffle (170) as set forth in claim 2, further comprising one or more connectors (200) extending between two portions of said carrier (175).

4. A baffle (170) as set forth in claim 3, wherein said connectors (200) are rigid connectors (200) that prevent the two portions of said carrier (175) from separating when said expandable material (180) expands.

5. A baffle (170) as set forth in claim 3, wherein said connectors (200) are flexible connectors (200) that limit separation of the two portions of said carrier (175) to a predetermined distance when said expandable material (180) expands.

6. A baffle (170) as set forth in claim 1, wherein said expandable material (180) includes a first expandable material (180) and a second expandable material (190).

7. A baffle (170) as set forth in claim 6, wherein said first expandable material (180) is at least partially disposed about a periphery of said carrier (175) and said second expandable material (190) is at least partially sandwiched by said carrier (175).

8. A baffle (170) as set forth in claim 7, wherein a thickness (A) of said first expandable material (180) is at least partially the same as the overall thickness (B) of said carrier (175) and a thickness (C) of said second expandable material (190) is less than the overall thickness (B) of said carrier (175).

9. A baffle (170) as set forth in claim 1, wherein said carrier (175) defines at least one hole (195) over at least a portion of said expandable material (180).

10. A baffle (170) as set forth in claim 1, wherein said carrier (175) defines at least one lip (205) at least partially supporting said expandable material (180) about a periphery of said carrier (175).

11. A baffle (170) as set forth in claim 10, wherein said carrier (175) defines two lips (205) at least partially supporting said expandable material (180) about the periphery of said carrier (175) such that said expandable material (180) is at least partially disposed about said two lips (205).

12. A baffle (170) as set forth in claim 1, wherein said carrier (175) defines a thin extension (185) having a substantially H, U, or V cross-sectional shape.

13. A baffle (170) as set forth in claim 1, wherein said carrier (175) is formed from a carrier (175) material overmolded onto said expandable material (180).

14. A baffle (170) as set forth in claim 13, wherein the superficial melt includes injecting said carrier material into a cavity (135) of a mold (105) at a temperature that causes the expandable material (180) to react on a surface and chemically bond to said carrier (175) material.

15. A baffle (170) as set forth in claim 1, wherein said carrier (175) includes a fixation element integrally formed with said carrier material (175).
